# EUROPEAN PATENT APPLICATION

(11) **EP 2 460 677 A1**
(43) Date of publication of application: **06.06.2012**
(21) Application number: 10804287.0
(22) Date of filing: 20.07.2010
(51) Int. Cl.: B60H 1/32, F04B 49/06

(54) **AIR CONDITIONING DEVICE FOR VEHICLE**

(30) Priority: 30.07.2009 JP 2009177993
(71) Applicant: Sanden Corporation, Isesaki-shi Gunma 372-8502 (JP)
(72) Inventor: ISHIZEKI Tetsuya, Isesaki-shi Gunma 372-8502 (JP); INOUE Atsuo, Isesaki-shi Gunma 372-8502 (JP); TSUBOI Masato, Isesaki-shi Gunma 372-8502 (JP); SUZUKI Kenichi, Isesaki-shi Gunma 372-8502 (JP)
(74) Representative: Prüfer & Partner GbR European Patent Attorneys
(86) International application number: PCT/JP2010/062189
(87) International publication number: WO 2011/013541

(57) **Abstract**

Provided is an air conditioning system for vehicles wherein a flow rate of refrigerant used for estimating a compressor torque can be accurately estimated by accurately detecting a difference between pressures at upstream and downstream sides of an orifice, which has a high correlation with the flow rate of refrigerant, and ultimately, the compressor torque can be accurately estimated, and this estimation can be performed while space saving and cost down can be achieved. The air conditioning system for vehicles having a refrigeration cycle provided with a refrigerant compressor, a condenser, a pressure reduction/expansion mechanism and an evaporator is **characterized in that** an orifice for throttling a refrigerant flow is disposed in a refrigerant path between the condenser and the pressure reduction/expansion mechanism, a pressure difference detection means capable of detecting a difference between pressures at upstream and downstream positions of the orifice is provided, and provided are a refrigerant flow rate estimation means for estimating a refrigerant flow rate with reference to the detected pressure difference and a compressor torque estimation means for estimating a compressor torque with reference to the estimated refrigerant flow rate.

## Description

### Technical Field of the Invention

The present invention relates to an air conditioning system for vehicles, and specifically, to an improvement of an air conditioning system for vehicles which can accurately estimate a refrigerant flow rate in its refrigeration cycle and, via the estimation, can accurately estimate a compressor torque, and which can achieve those easily by a compact structure.

### Background Art of the Invention

In a refrigeration cycle of an air conditioning system for vehicles having a compressor, a condenser, a pressure reduction/expansion mechanism and an evaporator in this order, it is frequently required to estimate a torque for driving the compressor which consumes most power. If the compressor torque can be estimated accurately and at real time, it becomes possible to reflect it to control for a vehicle engine, etc. (for example, fuel injection control for an engine), and to contribute saving of fuel consumption for the vehicle.

It is known that use of a refrigerant flow rate at that time is effective for the estimation of a compressor torque, and if the refrigerant flow rate can be estimated accurately, the compressor torque can also be accurately estimated. Further, in order to the refrigerant flow rate, it is known that it is effective to use a pressure difference between a pressure at an upstream position and a pressure at a downstream position in an appropriate zone of a refrigerant path (in particular, a refrigerant path containing a liquid phase) which has a high correlation with the refrigerant flow rate, and in order to give a clear pressure difference within a short zone in a circuit, usually, it is effective to provide an orifice. In the field of an air conditioning system for electric household appliances, a method is known wherein an orifice is provided within a refrigerant path and a pressure difference generated between upstream and downstream positions thereof is determined (for example, Patent document 1, paragraph [0004]). However, in this Patent document 1, a relationship between refrigerant flow rate and compressor torque is not referred.

On the other hand, in an air conditioning system for vehicles, because it is required to be installed in a limited space such as an engine compartment, it is strongly required to make the air conditioning system for vehicles small-sized and reduce the cost thereof. Further, although a prime mover for a vehicle is frequently used for driving a compressor in a refrigeration cycle, there may be a case where a power capable of being used for the drive of the compressor is restricted for controlling the prime mover for the vehicle for running the vehicle. Therefore, it is important to estimate a compressor torque in a refrigeration cycle more accurately also for control and saving of fuel consumption for vehicle side, etc.

### Prior art documents

### Patent documents

Patent document 1: JP-A-6-281300

### Summary of the Invention

### Problems to be solved by the Invention

As described above, in the field of an air conditioning system for vehicles, a method for intentionally providing a particular pressure difference detection means in a refrigerant path, estimating a refrigerant flow rate from the detected pressure difference and estimating a compressor torque from the estimated refrigerant flow rate in spite of a strong requirement of an accurate estimation of a compressor torque in a refrigeration cycle is not a general method. Therefore, for the purpose of estimating an accurate compressor torque finally, unless a design is performed in consideration of requirement specular in an air conditioning system for vehicles, that is, space saving and cost down, further, contribution to saving of fuel consumption of a vehicle, it is difficult to obtain an optimum formation.

Accordingly, an object of the present invention is to provide an air conditioning system for vehicles wherein an orifice is disposed at an optimum position in a refrigeration cycle, a refrigerant flow rate used for estimation of a compressor torque can be accurately estimated by accurately detecting a difference between pressures at upstream and downstream positions of the orifice which has a high correlation with the refrigerant flow rate, ultimately, the compressor torque can be estimated accurately, and by performing this estimation based on detection by a pressure difference detection means assembled efficiently in a particular place at an optimum form, space saving and cost down can be achieved and ultimately the estimation can contribute to saving of fuel consumption of a vehicle.

### Means for solving the Problems

To achieve the above-described object, an air conditioning system for vehicles according to the present invention having a refrigeration cycle provided with a refrigerant compressor, a condenser for condensing compressed refrigerant, a pressure reduction/expansion mechanism for reducing in pressure and expanding refrigerant sent from the condenser and an evaporator for evaporating refrigerant sent from the pressure reduction/expansion mechanism, is **characterized in that** an orifice for throttling a refrigerant flow is disposed in a refrigerant path between the condenser and the pressure reduction/expansion mechanism, a pressure difference detection means capable of detecting a pressure difference between pressures at upstream and downstream positions of the orifice in a refrigerant flow direction is provided, and provided are a refrigerant flow rate estimation means for estimating a refrigerant flow rate with reference to a pressure difference detected by the pressure difference detection means and a compressor torque estimation means for estimating a compressor torque with reference to a refrigerant flow rate estimated by the refrigerant flow rate estimation means.

Namely, in the air conditioning system for vehicles according to the present invention, the detection of a pressure difference between pressures at upstream and downstream positions of the orifice in the refrigerant flow direction, which becomes a basis for accurate estimation of the refrigerant flow rate, ultimately, for accurate estimation of the compressor torque, can be stably performed efficiently and accurately by disposing the orifice at an optimum position in the refrigeration cycle, namely, at a refrigerant path between the condenser and the pressure reduction/expansion mechanism whose refrigerant condition is in a stable condition that is formed mainly from a liquid phase. For providing the pressure difference detection means including the orifice, by adding a particular device as described later, it becomes possible to easily dispose it at a predetermined position while achieving space saving, and it also becomes possible to achieve cost down for the pressure difference detection means itself and the assembly thereof. Then, by passing the refrigerant, which has passed through the condenser, through the orifice, the pressure difference between pressures at upstream and downstream positions of the orifice is detected in a region in which the refrigerant is mainly in a liquid phase, and an accurate detection of the pressure difference can be performed efficiently. The accurate detection of the pressure difference enables an accurate estimation of the refrigerant flow rate, and ultimately, enables an accurate estimation of the compressor torque.

In this air conditioning system for vehicles according to the present invention, it is important how space saving and cost down can be achieved, and in order to achieve this efficiently, it is preferred to employ a structure wherein a tube for forming a part of the above-described refrigerant path between the condenser and the pressure reduction/expansion mechanism and the above-described pressure difference detection means are formed as an integrated unit, and the orifice is disposed in the unit. In such a structure, a desirable detection of the pressure difference becomes possible only by assembling the integrated unit at a predetermined position in the refrigeration cycle, namely, at a position of the refrigerant path between the condenser and the pressure reduction/expansion mechanism, thereby easily achieving space saving and cost down.

Further, it is preferred to employ a structure wherein a sight glass capable of observing an inside of the refrigerant path is further provided to the above-described integrated unit. In such a structure, the condition in the refrigerant path can be easily observed, and for example, in a case where bubbles are observed in the refrigerant path, it can be securely determined that the amount of refrigerant in the refrigeration cycle tends to lack, and it becomes possible to take a measure such as supplement of refrigerant.

Further, in the air conditioning system for vehicles according to the present invention, a structure can be employed wherein the above-described pressure difference detection means detects the pressure difference by calculating a difference between pressures detected by a first pressure sensor for detecting a pressure at an upstream position of the orifice in the refrigerant flow direction and a second pressure sensor, different from the first pressure sensor, for detecting a pressure at a downstream position of the orifice in the refrigerant flow direction. Namely, the first pressure sensor and the second pressure sensor can detect respective pressures independently from each other, and by determining a difference between both detected amounts, a desired pressure difference can be calculated and detected.

Therefore, the above-described refrigerant flow rate estimation means also can estimate the refrigerant flow rate with reference to the pressure difference detected by the pressure difference detection means and with reference to amounts detected by the first pressure sensor and/or the second pressure sensor. In such a manner, it becomes possible to estimate the refrigerant flow rate at a condition where an absolute value of a pressure at a detection position and a refrigerant condition accompanying with the absolute value are added to the pressure difference, and it becomes possible to estimate the refrigerant flow rate more accurately.

Further, a structure can be employed wherein the above-described compressor torque estimation means estimates the compressor torque with reference to a refrigerant flow rate estimated by the refrigerant flow rate estimation means, a physical amount having a correlation with a suction pressure of the compressor, a physical amount having a correlation with a rotational speed of the compressor and an amount detected by the first pressure sensor.

Except the above-described structure for providing first pressure sensor and second pressure sensor independent from each other, a structure can be employed wherein the above-described pressure difference detection means detects the pressure difference by a pressure difference sensor for directly detecting a pressure difference between pressures at upstream and downstream positions of the orifice in the refrigerant flow direction. In this case, although absolute values of the pressures at the respective positions of upstream and downstream sides of the orifice cannot be determined, since a pressure difference necessary for estimation of refrigerant flow rate can be directly detected, a quicker estimation of refrigerant flow rate becomes possible.

Such a structure for the refrigeration cycle in the present invention may be suitable particularly for an air conditioning system for vehicles for which space saving and cost down are strongly required. Further, if a structure is employed wherein a signal of the compressor torque estimated by the above-described compressor torque estimation means is sent to a control unit for a drive source of the compressor (for example, a control unit for a vehicle engine), an amount of power capable of being used for driving the compressor in the drive source can be properly determined, a more adequate control as the whole of the vehicle becomes possible, and it can contribute also to saving of fuel consumption of the vehicle, etc. more appropriately.

### Effect according to the Invention

Thus, in the air conditioning system for vehicles according to the present invention, the pressure difference detection means including the orifice is assembled efficiently at an optimum position in the refrigeration cycle, the pressure difference between pressures at upstream and downstream positions of the orifice can be detected accurately, and a refrigerant flow rate having a high correlation with the pressure difference, ultimately, a compressor torque, can be estimated accurately. Then, by adding a device to the structure of the pressure difference detection means including the orifice and the form for assembly thereof, in particular, by forming it as an integrated unit, space saving and cost down as the whole of the refrigeration cycle can be achieved more securely while satisfying the function up to the accurate estimation of the compressor torque, and an optimum formation for an air conditioning system for vehicles can be realized.

### Brief explanation of the drawings

[Fig. 1] Fig. 1 is a schematic diagram of a refrigeration cycle in an air conditioning system for vehicles according to an embodiment of the present invention.
[Fig. 2] Fig. 2 is a schematic diagram of a pressure difference detection means disposed in the refrigeration cycle depicted in Fig. 1.
[Fig. 3] Fig. 3 is an appearance perspective view of the pressure difference detection means depicted in Fig. 2.
[Fig. 4] Fig. 4 depicts diagrams in characteristics showing examples of P-h diagrams of the refrigeration cycle depicted in Fig. 1.

### Embodiments for carrying out the Invention

Hereinafter, desirable embodiments of the present invention will be explained referring to figures.

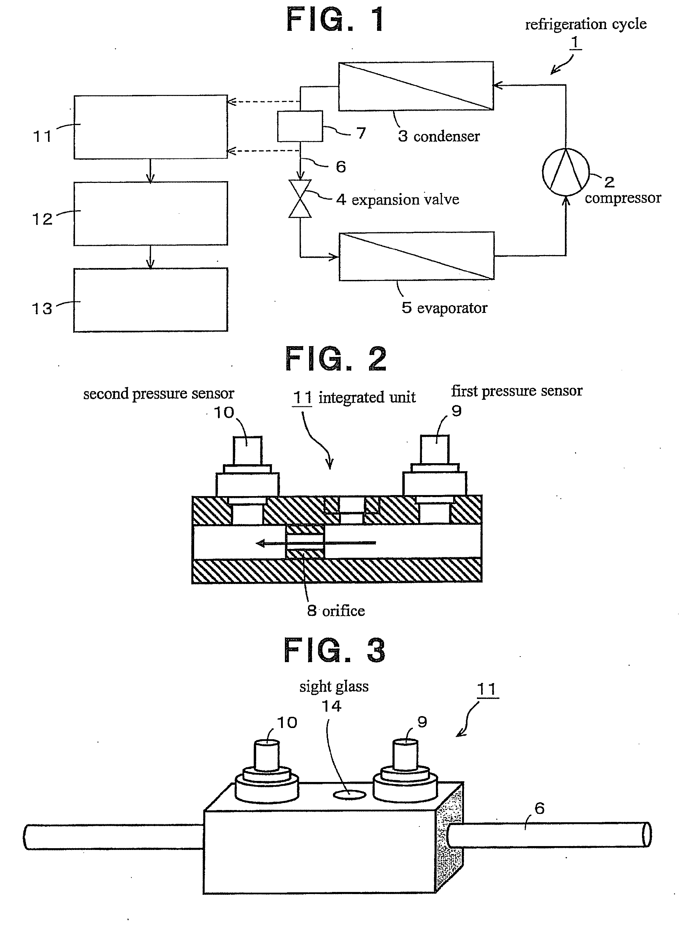

Fig. 1 shows a schematic structure of a refrigeration cycle in an air conditioning system for vehicles according to an embodiment of the present invention. In the figure, symbol 1 indicates the whole of a refrigeration cycle, and refrigeration cycle 1 has a compressor 2 for compressing refrigerant, a condenser 3 for condensing the compressed refrigerant, an expansion valve 4 as a pressure reduction/expansion mechanism for pressure reducing and expanding the refrigerant sent from the condenser 3, and an evaporator 5 for evaporating the refrigerant sent from the expansion valve 4. In a refrigerant path 6 between condenser 3 and expansion valve 4 in this refrigeration cycle 1, an orifice for throttling the flow of refrigerant is provided, and a pressure difference detection means 7 capable of detecting a pressure difference between pressures at the upstream and downstream positions of the orifice in the direction of the refrigerant flow is provided.

In this embodiment, pressure difference detection means 7 is formed as shown in Fig. 2, and is formed as an integrated unit 11 wherein an orifice 8 for throttling the flow of refrigerant in the arrow direction is assembled in the inside, and a first pressure sensor 9 and a second pressure sensor 10 detecting the pressures at the respective upstream and downstream positions of the orifice 8 in the refrigerant flow direction are formed integrally. By assembling this integrated unit 11 at a predetermined position of the above-described refrigerant path 6, orifice 8, first pressure sensor 9 and second pressure sensor 10 are disposed simultaneously at desired positions.

In this embodiment, a difference between amounts detected both sensors 9, 10 of first pressure sensor 9 positioned at the upstream side of orifice 8 and second pressure sensor 10 positioned at the downstream side of orifice 8 is calculated by a pressure difference calculation means 11 as a pressure difference to be detected in the present invention. Where, as aforementioned, the detection of the pressure difference can also be performed by a pressure difference sensor (not shown) for directly detecting the pressure difference between pressures at upstream and downstream positions of orifice 8 in the refrigerant flow direction, other than the structure where first pressure sensor 9 and second pressure sensor 10 independent from each other are provided as described above.

Symbol 12 indicates a refrigerant flow rate estimation means, and it estimates a refrigerant flow rate with reference to the pressure difference calculated (detected) by pressure difference calculation means 11 (pressure difference detection means). In this case, if the amounts detected by first pressure sensor 9 and/or second pressure sensor 10 (that is, physical amounts having a correlation with the absolute values of the detected pressures) are referred together, a more accurate estimation of refrigerant flow rate becomes possible.

The torque of compressor 2 is estimated by compressor torque estimation means 13 with reference to the refrigerant flow rate estimated by the above-described refrigerant flow rate estimation means 12. This estimation of the torque of compressor 2 can be carried out, for example, by estimating the compressor torque with reference to the refrigerant flow rate estimated by refrigerant flow rate estimation means 12, a physical amount having a correlation with a suction pressure of compressor 2 (for example, a physical amount detected by a suction pressure sensor), a physical amount having a correlation with a rotational speed of compressor 2, and the amount detected by the above-described first pressure sensor 9.

Thus, by disposing orifice 8 for throttling the flow of refrigerant, which has passed through condenser 3, in a specified region in refrigeration cycle 1 and accurately detecting a pressure difference between pressures at upstream and downstream positions of the orifice 8, the refrigerant flow rate having a high correlation with the pressure difference, ultimately, the compressor torque, can be estimated accurately. Further, by forming orifice 8 and first pressure sensor 9 and second pressure sensor 10 as integrated unit 11, while achieving a desired detection of pressure difference, facilitation of assembly of these at predetermined positions, and space saving and cost down as the whole of the refrigeration cycle, can be achieved securely.

Furthermore, in the present invention, for example, as shown in Fig. 3, a structure can also be employed wherein a sight glass 14 is provided to the above-described integrated unit 11 and the inside of refrigerant path 6 can be appropriately observed through the sight glass 14. In such a structure, the condition in refrigerant path 6 can be easily observed, and as aforementioned, for example, in case where bubbles are observed in refrigerant path 6, it can be determined that the amount of refrigerant in refrigeration cycle 1 tends to lack, and it becomes possible to take an appropriate measure such as supplement of refrigerant.

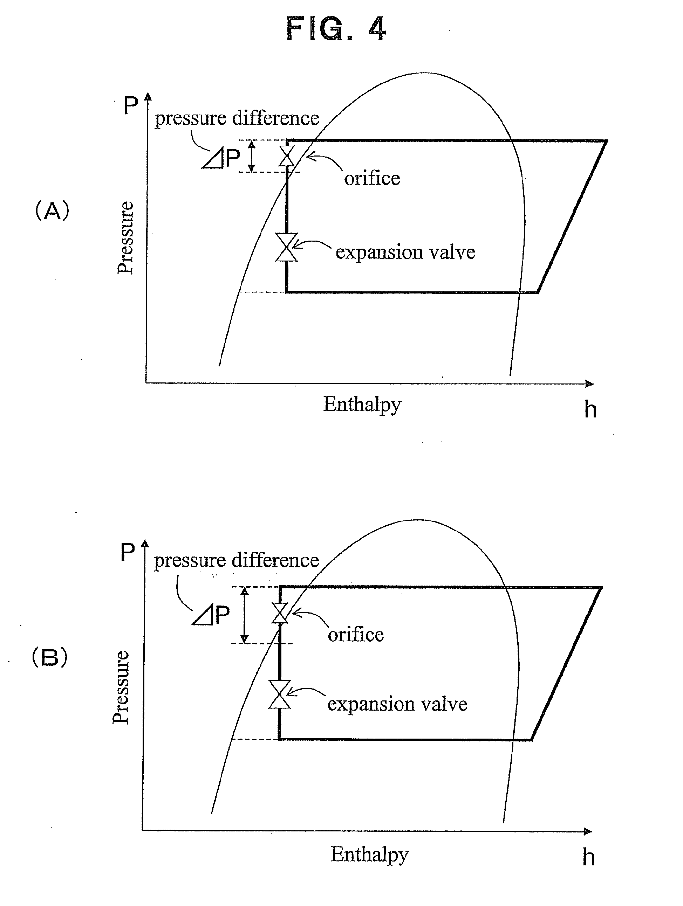

The operation of refrigeration cycle 1 in the air conditioning system for vehicles according to the present invention can be represented by a P-h diagram, for example, as shown in Figs. 4 (A) and (B). Namely, by orifice 8 provided on predetermined refrigerant path 6, a pressure difference between the upstream and downstream sides of the orifice can be forcibly given, and it becomes possible to estimate a refrigerant flow rate having a high correlation with the pressure difference, ultimately, a compressor torque. At that time, the stable and accurate detection of the pressure difference between the upstream and downstream sides of the orifice may contribute to an accurate estimation of refrigerant flow rate and an accurate estimation of compressor torque. In order to detect the pressure difference between the upstream and downstream sides of the orifice accurately at a stable condition, it is preferred to detect it at a condition where there is no phase change of refrigerant or an extremely small phase change. For example, as shown in Fig. 4(A), it is preferred to be set so that a pressure difference ΔP due to the orifice occurs in the same liquid phase. However, for example, as shown in Fig. 4(B), even if a pressure difference ΔP occurs over the phase changing region, although the accuracy may be reduced slightly, it is possible to estimate the refrigerant flow rate and the compressor torque at a sufficiently high accuracy.

### Industrial Applications of the Invention

The air conditioning system for vehicles according to the present invention can be applied to any air conditioning system for vehicles requiring to accurately estimate a compressor torque, and in particular, it is suitable for a case where space saving and cost down are required.

### Explanation of symbols

- 1:: refrigeration cycle
- 2:: compressor
- 3:: condenser
- 4:: expansion vale as pressure reduction/expansion mechanism
- 5:: evaporator
- 6:: refrigerant path
- 7:: pressure difference detection means
- 8:: orifice
- 9:: first pressure sensor
- 10:: second pressure sensor
- 11:: pressure difference calculation means
- 12:: refrigerant flow rate estimation means
- 13:: compressor torque estimation means
- 14:: sight glass

## Claims

1. An air conditioning system for vehicles having a refrigeration cycle provided with a refrigerant compressor, a condenser for condensing compressed refrigerant, a pressure reduction/expansion mechanism for reducing in pressure and expanding refrigerant sent from said condenser and an evaporator for evaporating refrigerant sent from said pressure reduction/expansion mechanism, **characterized in that** an orifice for throttling a refrigerant flow is disposed in a refrigerant path between said condenser and said pressure reduction/expansion mechanism, a pressure difference detection means capable of detecting a pressure difference between pressures at upstream and downstream positions of said orifice in a refrigerant flow direction is provided, and provided are a refrigerant flow rate estimation means for estimating a refrigerant flow rate with reference to a pressure difference detected by said pressure difference detection means and a compressor torque estimation means for estimating a compressor torque with reference to a refrigerant flow rate estimated by said refrigerant flow rate estimation means.

2. The air conditioning system for vehicles according to claim 1, wherein a tube for forming a part of said refrigerant path between said condenser and said pressure reduction/expansion mechanism and said pressure difference detection means are formed as an integrated unit, and said orifice is disposed in said unit.

3. The air conditioning system for vehicles according to claim 2, wherein a sight glass capable of observing an inside of said refrigerant path is provided to said unit.

4. The air conditioning system for vehicles according to any of claims 1 to 3, wherein said pressure difference detection means detects said pressure difference by calculating a difference between pressures detected by a first pressure sensor for detecting a pressure at an upstream position of said orifice in said refrigerant flow direction and a second pressure sensor, different from said first pressure sensor, for detecting a pressure at a downstream position of said orifice in said refrigerant flow direction.

5. The air conditioning system for vehicles according to claim 4, wherein said refrigerant flow rate estimation means estimates said refrigerant flow rate with reference to said pressure difference detected by said pressure difference detection means and with reference to amounts detected by said first pressure sensor and/or said second pressure sensor.

6. The air conditioning system for vehicles according to claim 4 or 5, wherein said compressor torque estimation means estimates said compressor torque with reference to a refrigerant flow rate estimated by said refrigerant flow rate estimation means, a physical amount having a correlation with a suction pressure of said compressor, a physical amount having a correlation with a rotational speed of said compressor and an amount detected by said first pressure sensor.

7. The air conditioning system for vehicles according to any of claims 1 to 3, wherein said pressure difference detection means detects said pressure difference by a pressure difference sensor for directly detecting a pressure difference between pressures at upstream and downstream positions of said orifice in said refrigerant flow direction.

8. The air conditioning system for vehicles according to any of claims 1 to 7, wherein a signal of said compressor torque estimated by said compressor torque estimation means is sent to a control unit for a drive source of said compressor.
